# EUROPEAN PATENT SPECIFICATION

(11) **EP 1 409 197 B1**
(45) Date of publication and mention of the grant of the patent: **30.01.2008**
(21) Application number: 01963374.2
(22) Date of filing: 26.07.2001
(51) Int. Cl.: B23Q 1/70, B23Q 1/26, B23Q 16/10, B23B 3/16

(54) **CHUCK FOR THE SUPPORT AND ALTERNATIVE POSITIONING OF FIXED AND ROTATABLE TOOLS FOR DRILLING AND/OR MILLING, IN TOOL MACHINES**
ARRETIERBARE WERKZEUGSPINDEL ZUR WAHLWEISEN FIXIERUNG ROTIERENDER UND FESTSTEHENDER WERKZEUGE ZUR DREH- BZW. FRÄSBEARBEITUNG
MANDRIN POUR LE SUPPORT ET LE POSITIONNEMENT ALTERNATIF D'OUTILS FIXES ET ROTATIFS DESTINES AU PERCAGE ET/OU AU FRAISAGE, DANS DES MACHINES-OUTILS

(43) Date of publication of application: 21.04.2004
(73) Proprietor: DUPLOMATIC AUTOMAZIONE S.P.A., 21052 Busto Arsizio (Varese) (IT)
(72) Inventor: DE BERNARDI, Franco, I-21052 Busto Arsizio (IT); MONTI, Marco, I-21052 Busto Arsizio (IT); BUSCA, Gian, Luca, I-13058 Santhia (IT)
(74) Representative: Cattaneo, Elisabetta
(86) International application number: PCT/IT2001/000409
(87) International publication number: WO 2003/009963

(56) References cited:
- EP-A- 0 259 517
- EP-A- 0 415 138
- EP-A- 0 887 134
- US-A- 4 570 313

## Description

The present invention relates to a chuck, in particular an electro chuck, in tool machines, comprising a stationary part, defining a hollow space extending longitudinally according to a rotational axis of the chuck and firmly connected to the tool machine and a rotatable part, for the support and alternative positioning of fixed tools and rotatable tools for drilling and/or milling, driven by an electric motor, positioned inside said hollow space and supported by this through a first and second group of rolling-contact bearings whose outer shell is connected firmly to said stationary part whereas the internal shell is firmly connected to said rotatable part, said groups of bearings being axially spaced apart along the rotational axis of the chuck, connecting means movable between a first position in which they connect to each other respective joining means firmly connected to said rotatable part and joining means firmly connected to said stationary part, making the rotatable part firmly connected to the stationary part, and a position in which such connecting means are axially disengaged from said joining means, thus allowing the rotatable part to be put into rotation with respect to the stationary part through said electric motor.

Chucks of the type indicated above are known in the technical field and are commonly employed to alternatively support fixed tools, suitable for carrying out turning operations, and rotatable tools, suitable for carrying out drilling or milling operations.

If tools for turning operations are used, the rotatable part of the chuck is locked and connected firmly to the stationary part; instead, when tools for drilling or milling operations are to be used, the rotatable part is let free to rotate and is driven by the electric motor that, in a conventional way, forms an integral part of the chuck itself.

An example of such a mechanism is shown in the document EP-A-0 887 134.

According to the known prior art indicated above, when the rotatable part of the chuck is locked to the stationary part, the connecting means that simultaneously engage with the joining means, in the form of Hirth teeth, carried both on the rotatable and fixed part, exert an axial thrust onto the rotatable part.

Such thrust tends to be transferred onto the group of bearings arranged between the stationary part and rotatable part, respectively.

In particular, the thrust is transferred onto the shell of the bearings which if force-fitted onto the rotatable part, thus forming a clearance of uncontrolled size on the bearing and without any possibility of recovering it when the rotatable part is detached from the stationary part and must therefore take on its specific task of driving rotating tools again.

This is a serious drawback, since the machining operations are therefore affected by imprecisions which are not compatible with the conventional tolerances.

The purpose of the present invention is that of providing a chuck of the type indicated in the introduction, provided with a mechanisms for locking and unlocking the rotatable part with respect to the stationary part, which allows the imprecisions in the machining operations to be reduced, which derive from the uncontrolled formation of clearances between the parts submitted to the thrust of the connecting means.

The purpose is achieved by a chuck according to claim 1 with the attached drawings.

The invention will be further described with reference to an example of an embodiment, provided only as an indication and without any limiting purposes, illustrated in the attached drawings, in which:

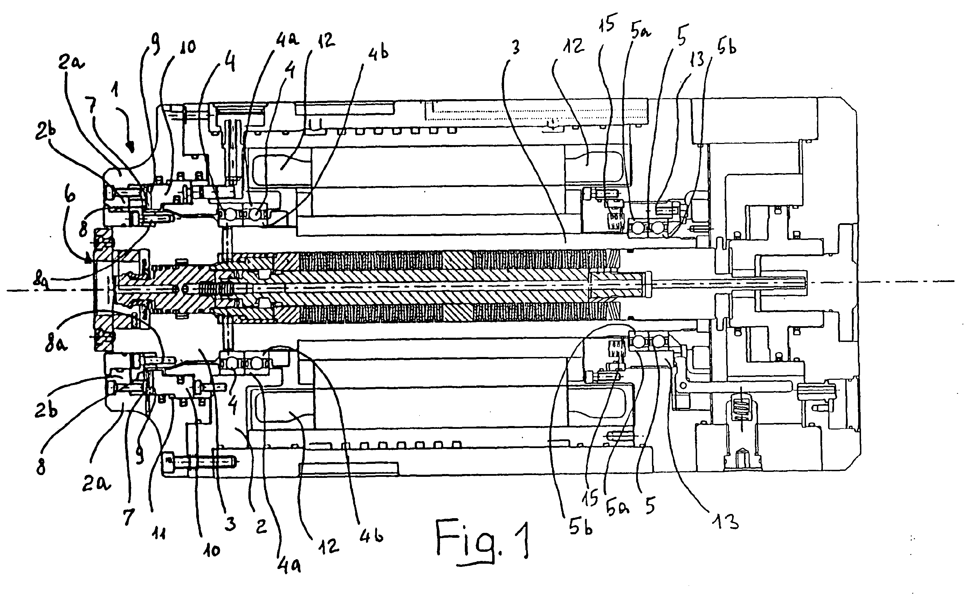

figure 1 shows the chuck according to the invention in longitudinal section, in the position where the toothed joining means are disengaged and the rotatable part is free to rotate;

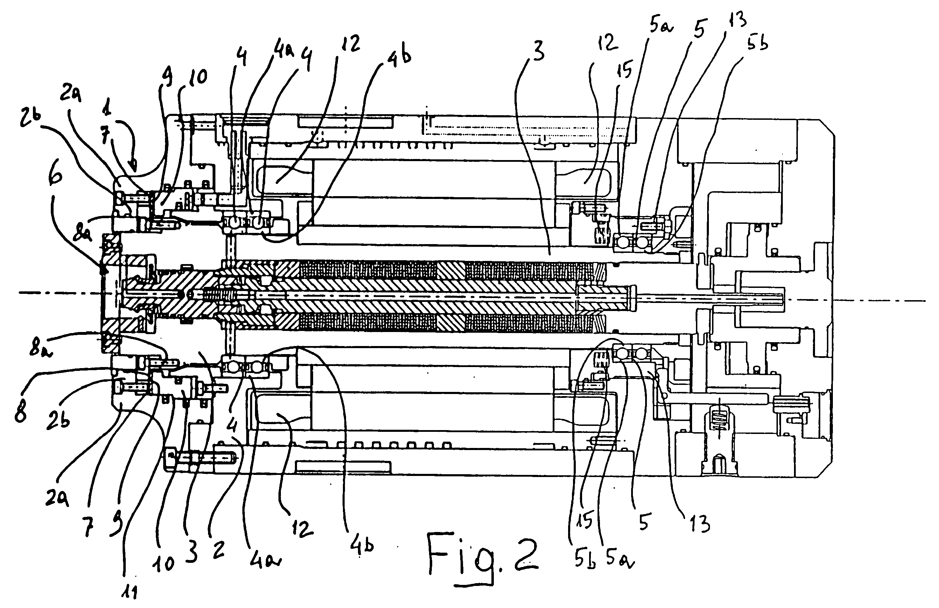

figure 2 shows the mechanism of figure 1, in the position in which the toothed joining means are engaged with the connecting means and the rotatable part is locked and
connected firmly to the stationary part;
figure 3 is a detail of figure 1, in enlarged view;
figure 4 is a detail of figure 2 in enlarged view;
figure 5 shows, in enlarged view, the mechanism for recovering the clearances in the position where the rotatable part is free to rotate about its axis;
figure 6 shows in enlarged view, the mechanism of figure 5 in the position in which the rotatable part is locked to the fixed part.

With reference to the aforementioned figures, a chuck of the type which is directly driven by an electric motor incorporated onboard the chuck itself, is indicated in its whole with 1.

The stationary part of the chuck is indicated with 2; it is intended for being connected, for example, to a conventional, not illustrated slide, of a tool machine, in particular a lathe.

The rotatable part of the chuck, instead, is indicated with 3; it is connected to the stationary part 2 through a first group of bearings 4 and a second group of bearings 5, of the rolling-contact type, such as ball bearing.

The respective outer shell 4a and 5a of the bearings is connected to the stationary part 2 of the chuck, respectively, whereas the respective inner shell 4b and 5b is force-fitted onto the rotatable part 3, respectively.

This is equipped with a device, indicated in its whole with 6, for clamping and retaining a not illustrated tool, that, as it will be seen hereinbelow, can be a fixed tool for turning or a rotating tool, for example a drill tip or a milling cutter.

The chuck comprises a mechanism for locking the rotatable part 3 to the stationary part 2, according to the operation to be carried out and thus according to the type of tool to be fit into the device 6 of the rotatable part. Such a mechanism is comprised of a first toothed crown, of the Hirth type, indicated with 7, firmly connected to the stationary part 2, arranged in correspondence of the front part 2a thereof, of a second toothed crown 8, also of the Hirth type, firmly connected to the rotatable part 3, and of a third toothed crown 9 carried by an annular member 10 housed within an annular hollow space formed between the stationary part 2 and the rotatable part 3.

The toothed crowns 7 and 8 form the joining means respectively of the stationary and rotatable part, whereas the toothed crown 9 forms the connecting means suitable for engaging and disengaging the joining means.

The toothed crown 8, firmly connected to the rotatable part 3, is connected thereto through a plurality of screws 8a and is arranged concentrically with respect to the toothed crown 7, firmly connected to the stationary part, axially aligned with a shoulder 2b of the stationary part 2.

The annular member 10, with the toothed crown 9 is axially movable towards the toothed crowns 7 and 8 to engage these and hence lock the rotatable part 3 of the chuck to the stationary part 2, thus preventing it from rotating.

With a reverse axial displacement, the annular member 10 is moved away from the toothed crowns 7 and 8, thus unlocking the rotatable part 3 which thus can be again driven in rotation by the conventional onboard electric motor, schematically represented by its electric winding 12.

The annular member 10 behaves therefore as a conventional hydraulic piston inside the hollow space 11 which form its cylinder through the interposition of conventional sealing means.

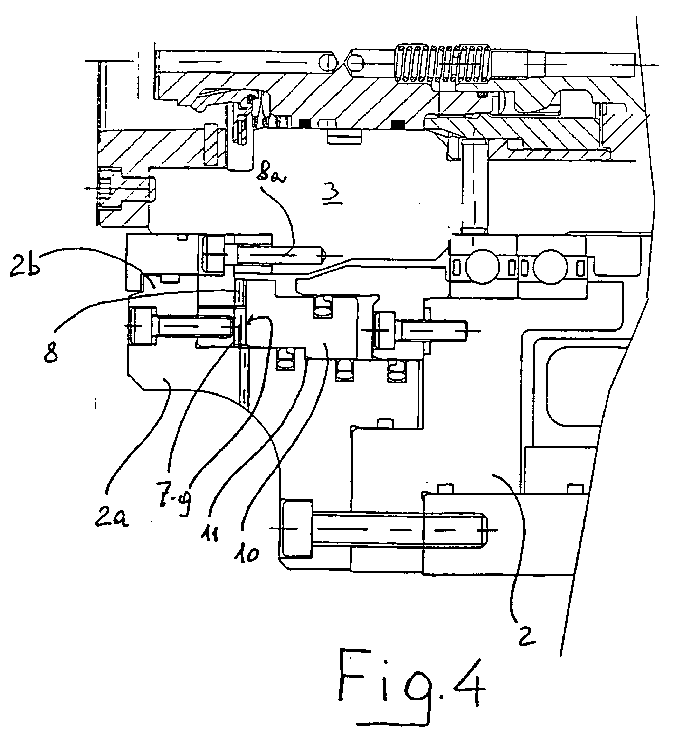

It should be noted that, as illustrated in detail in figure 4, when the rotatable part 3 is locked to the stationary part 2, the thrust exerted by the annular element 10 on the toothed crown 8 pushes against the shoulder 2b of the stationary part 2.

Moreover, the same shoulder 2b determines a fixed abutment plane against which the rotatable part 3 abuts when it is locked, with the full advantage of precision of working of the tool connected to said part.

In accordance with the invention, therefore, the groups of bearings 4 and 5, when the rotating part 3 is locked in the stationary part 2, are only stressed for the size of the clearance which is necessary to axially move the rotatable part 3 towards the shoulder 2b of the stationary part in that the further thrust exerted by the toothed crown 9 on the toothed crowns 7 and 8 is absorbed by the shoulder 2b.

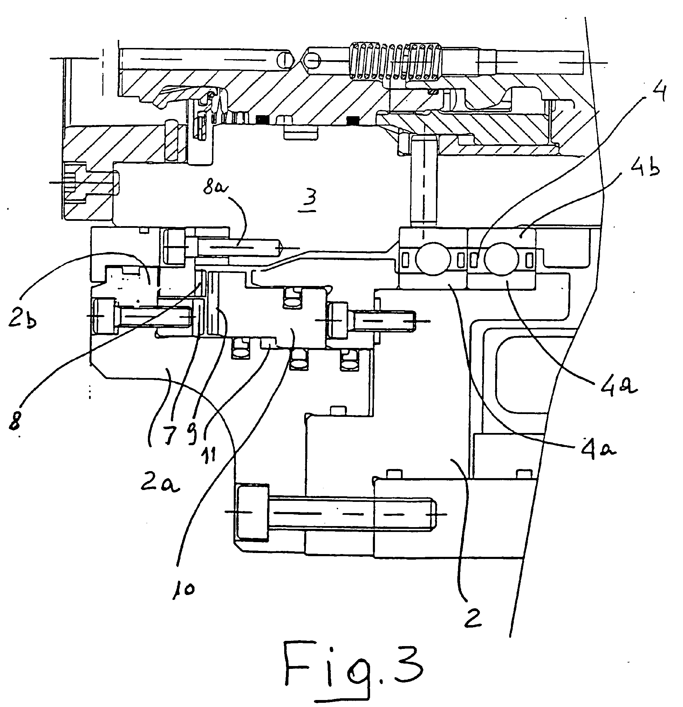

Still in accordance with the invention, the chuck is equipped with a mechanism which, when the rotatable part 3 is unlocked from the stationary part 2, through the disengagement of the connection crown 9 from the crowns 7 and 8, allows the recuperation of the clearance build up in the groups of bearings 4 and 5 during the locked period and ensures that the rotatable part 3 is completely free to rotate and in particular not engaged with the shoulder 2b as illustrated in greater detail in figure 3.

Such a mechanism comprises a ring 13 placed between the group of bearings 5 and the stationary part 2. With such a ring 13, more precisely, the outer shell 5a of the bearings engages. It can be axially displaced within a hollow space 14 formed between the rotatable part 3 and the stationary part 2 under the thrust of a plurality of elastic elements 15, for example coil springs, which react against the base 16 of respective houses 17 formed in the fixed part 2.

Such elastic elements are preloaded so as to exert a thrust upon the ring 13 in the opposite direction to that according to which the annular element 10 carrying toothings 9 acts, when it determines the locking of the Hirth toothings 7 and 8.

The mechanism for the recovery of the clearance also comprises a security device which operates when the rotatable part 3 is free to rotate with respect to the fixed part 2.

The mechanism is made up of an annular member 18 housed inside an annular hollow space 19 also formed in the fixed part 2 of the chuck.

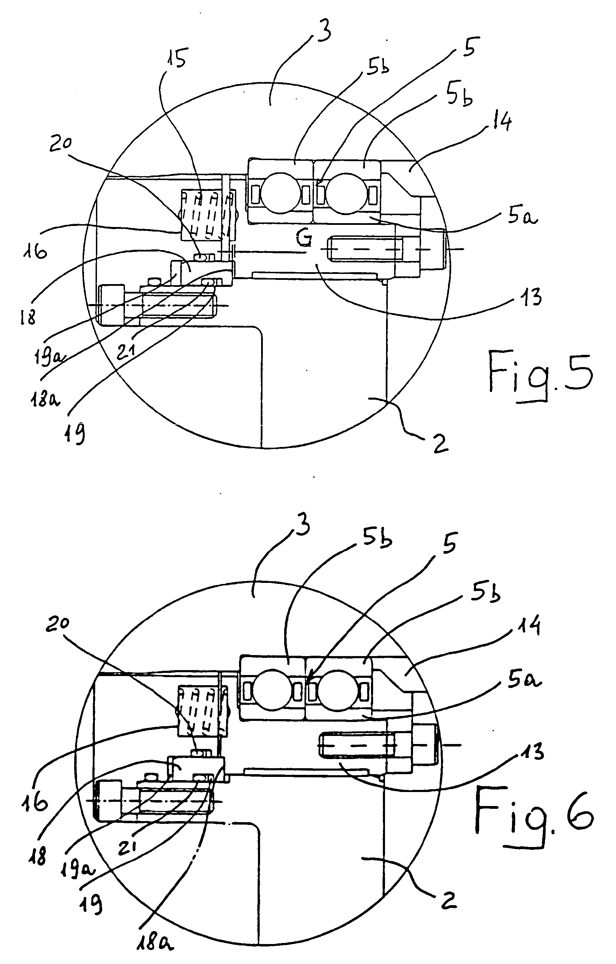

As can be observed in greater detail in figure 5, the annular element 18 axially faces with its annular plane 18a, the ring 13 with respect to which it is separated with a predetermined axial clearance G.

Such a clearance G is determined through the axial movement of the member 18 which, in the hollow space 19, functionally behaves like a cylinder which is defined by the washers 20 and 21, and by the pressure induced in the chamber 19a.

Should the ring 13, during the operation with the rotating tool, receive an excessive axial thrust with the consequent risk of also undergoing a substantial axial displacement in the direction of lockage, the ring itself is contained by the annular plane 18a which acts as a shoulder for the member 13 after it has gone beyond the clearance G.

During the operation with fixed tools and thus with engaged toothings 7, 8 and 9, the hydraulic pressure falling to zero into the chamber 19a, allows the axial displacement of the annular member 18 being thrusted by the ring 13.

From the above it is clear that, at the end of a working stage wherein, to allow the engagement of a fixed tool, the chuck was used with its rotatable part locked to the stationary part through the engagement of the toothings 7 and 8 with the toothing 9, one can go back to the position wherein the chuck operates with a rotatable tool, freeing the toothings 7 and 8 through the axial displacement of the element 10.

Simultaneously to such an operation, the clearances which had formed as a consequence of the axial displacement of the rotatable part 3 and which were derived from the thrust of the annular element 10 against the toothing 8, are completely recovered by the action carried out by the springs 15 against the ring 13 which in turn transfers the recovery action of the axial clearance onto the groups of bearings 5 and 4.

Moreover, the distancing of the toothed crown 8 from the shoulder 2b, and with this the freedom of rotation of the rotatable part 3 of the chuck is assured without interfering with the stationary part 2.

The chuck according to the invention therefore allows operation with two different types of tool, fixed and rotating, with a high degree of precision of operation.

## Claims

1. Chuck (1), in particular electro chuck in tool machines, comprising a stationary part (2), defining a hollow space (3a) extending longitudinally according to a rotational 1 axis (X-X) of the chuck (1) and firmly connected to the tool machine and a rotatable part, for the support and alternative positioning of fixed tools and rotatable tools for drilling and/or milling, driven by an electric motor, positioned inside said hollow space (3a) and supported by this through a first (4) and second (5) group of rolling-contact bearings whose outer shell (4a, 5a) is made firmly connected to said stationary part (2) whereas the internal shell (4b, 5b) is firmly connected to said rotatable part (3), said groups of bearings (4, 5) being axially spaced apart along the rotational axis (X-X) of the chuck, connecting means (9, 10) movable between a first position in which they connect to each other respective joining means (8) firmly connected to said rotatable part (3) and joining means (7) firmly connected to said stationary part (2), making the rotatable part (3) firmly connected to the stationary part (2), and a position in which such connecting means (9, 10) are axially disengaged from said joining means (7, 8), thus allowing the rotatable part (3) to be put into rotation with respect to the stationary part (2) through said electric motor (12), **characterized by** the fact that it comprises an annular shoulder (2b) arranged concentrically with respect to the rotatable part (3) in correspondence of the joining means (8) firmly connected thereto, said shoulder (2b) determining a bearing plane for said joining means (8) of the rotatable part (3) in the opposite direction to that of the locking exerted by said connecting means (9, 10), as well as a clearance recovery mechanism (13, 15) operative only when said rotatable part (3) is free to rotate around said stationary part (2), so to ensure the detachment of the rotatable part (3) from said shoulder (2b).

2. Chuck according to claim 1, **characterised in that** said clearance recovery mechanism comprises a ring (13) arranged concentrically with respect to said rotatable part (3) within a first annular hollow space (14) of said stationary part (2), said ring (13) acting as support of the outer shell (5a) of the bearings (5) belonging to the group of bearings axially spaced apart from said connecting means (9, 10) and joining means (7, 8) and being free to move axially with respect to said hollow space (14), as well as an elastic member (15) arranged between said ring (13) and said stationary part (2), exerting a thrust onto the ring (13) in the opposite axial direction to that of the locking of said connecting means (9, 10) .

3. Chuck according to claims 1 o 2, **characterised in that** said connecting means (9, 10) and said joining means (7) firmly connected to the stationary part (2) and said joining means (8) firmly connected to the rotatable part (3) are formed by annular members provided with front toothing of the Hirth type.

4. Chuck according to claim 3, **characterised in that** said connecting means (9, 10) for connecting to each other the joining means (8) firmly connected to said rotatable part (3) and the joining means (7) firmly connected to said stationary part (2), respectively, are actuated by a respective annular hydraulic cylinder (10) arranged concentrically with respect to said rotatable part (3).

5. Chuck according to any one of claims 2, 3 and 4, **characterised in that** it includes an annular member (18) housed within a second annular hollow space (19), acting as a hydraulic piston and cylinder in order to position the end (18a) of said member (18) at a predetermined axial distance (G) from said ring (13), said end (18a) forming an axial abutment of said ring (13), which limits its displacement in the direction of motion of said connecting means (9, 10) towards said joining means (7, 8).

## Patentansprüche

1. Spannfutter (1), insbesondere Elektro-Spannfutter in Werkzeugmaschinen, mit einem stationären Teil (2), der einen Hohlraum (3a) festlegt, der sich longitudinal entsprechend einer Drehachse (X-X) des Spannfutters (1) erstreckt und fest mit der Werkzeugmaschine verbunden ist, sowie einem drehbaren Teil für die Halterung und alternative Positionierung von feststehenden Werkzeugen und drehbaren Werkzeugen zum Bohren und/oder Fräsen, die von einem Elektromotor angetrieben in dem Hohlraum (3a) positioniert und von diesem über eine erste (4) und zweite (5) Gruppe von Wälzkontaktlagern gelagert sind, deren äußere Hülse (4a,5a) fest mit dem stationären Teil (2) verbunden ist, während die innere Hülse (4b, 5b) fest mit dem drehbaren Teil (3) verbunden ist, wobei die Gruppen von Lagern (4,5) axial entlang der Drehachse (X-X) des Spannfutters beabstandet sind, sowie mit Verbindungsmitteln (9,10), die zwischen einer ersten Position, in der sie jeweilige fest mit dem drehbaren Teil (3) verbundene Zusammenfügungsmittel (8) und fest mit dem stationären Teil (2) verbundene Zusammenfügungsmittel (7) miteinander verbinden, wodurch der drehbare Teil (3) fest mit dem stationären Teil (2) verbunden wird, und einer Position, in der solche Verbindungsmittel (9,10) gegenüber den Zusammenfügungsmitteln (7,8) axial außer Eingriff sind, was es ermöglicht, dass der drehbare Teil (3) durch den Elektromotor (12) in Bezug auf den stationären Teil (2) in Drehung versetzt wird, beweglich sind,
**dadurch gekennzeichnet, dass** es eine ringförmige Schulter (2b) umfasst, die konzentrisch in Bezug auf den drehbaren Teil (3) entsprechend dem fest mit diesem verbundenen Zusammenfügungsmittel (8) angeordnet ist, wobei die Schulter (2b) eine Lagerebene für das Zusammenfügungsmittel (8) des drehbaren Teils (3) in der entgegengesetzten Richtung zu derjenigen der von den Verbindungsmitteln (9,10) ausgeübten Verriegelung bestimmt, sowie einen Abstands-Wiederherstellungsmechanismus (13,15), der nur dann operativ ist, wenn der drehbare Teil (3) frei um den stationären Teil (2) drehen kann, um so das Loslösen des drehbaren Teils (3) von der Schulter (2b) sicherzustellen.

2. Spannfutter nach Anspruch 1, **dadurch gekennzeichnet, dass** der Abstands-Wiederherstellungsmechanismus einen Ring (13) aufweist, der konzentrisch in Bezug auf den drehbaren Teil (3) innerhalb eines ersten ringförmigen Hohlraums (14) des stationären Teils (2) angeordnet ist, wobei der Ring (13) als Lager bzw. Halterung der äußeren Hülse (5a) der Lager (5) wirkt, die zu der Gruppe von Lagern gehören, die axial von den Verbindungsmitteln (9,10) und den Zusammenfügungsmitteln (7,8) beabstandet sind und sich axial frei in Bezug auf den Hohlraum (14) bewegen können, sowie ein elastisches Element (15), das zwischen dem Ring (13) und dem stationären Teil (2) angeordnet ist und eine Schubkraft auf den Ring (13) in der entgegengesetzten axialen Richtung zu der der Verriegelung der Verbindungsmittel (9,10) ausübt.

3. Spannfutter nach Anspruch 1 oder 2, **dadurch gekennzeichnet, dass** die Verbindungsmittel (9,10) und das fest mit dem stationären Teil (2) verbundene Zusammenfügungsmittel (7) sowie das fest mit dem drehbaren Teil (3) verbundene Zusammenfügungsmittel (8) durch ringförmige Elemente gebildet sind, die mit einer Frontverzahnung des Hirth-Typs versehen sind.

4. Spannfutter nach Anspruch 3, **dadurch gekennzeichnet, dass** die Verbindungsmittel (9,10) zum Verbinden des fest mit dem drehbaren Teil (3) verbundenen Zusammenfügungsmittels (8) mit dem fest mit dem stationären Teil (2) verbundenen Zusammenfügungsmittel (7) durch einen jeweiligen ringförmigen Hydraulikzylinder (10) betätigt werden, der konzentrisch in Bezug auf den drehbaren Teil (3) angeordnet ist.

5. Spannfutter nach einem der Ansprüche 2, 3 oder 4, **dadurch gekennzeichnet, dass** es ein ringförmiges Element (18) aufweist, das in einem zweiten ringförmigen Hohlraum (19) aufgenommen ist und als Hydraulikkolben und Zylinder wirkt, um das Ende (18a) des Elements (18) an einem vorbestimmten axialen Abstand (G) von dem Ring (13) zu positionieren, wobei das Ende (18a) einen axialen Anschlag des Rings (13) bildet, welcher dessen Bewegung in der Bewegungsrichtung der Verbindungsmittel (9,10) zu den Zusammenfügungsmitteln (7,8) hin begrenzt.

## Revendications

1. Mandrin (1), en particulier un mandrin électrique dans des machines-outils, comportant une partie statique (2), définissant un espace creux (3a) s'étendant longitudinalement selon un axe de rotation (x-x) du mandrin (1) et relié fixement à la machine-outil et une partie pivotante, pour le support et le positionnement alternatif d'outils fixes et outils pivotants pour le perçage et/ou fraisage, entraîné par un moteur électrique, positionné à l'intérieur dudit espace creux (3a) et soutenu par celui-ci moyennant un premier (4) et second (5) groupe de paliers à roulement dont la coquille extérieure (4a, 5a) est reliée fixement à ladite partie statique (2), tandis que la coquille intérieure (4b, 5b) est reliée fixement à ladite partie pivotante (3), lesdits groupes de paliers (4, 5) étant axialement écartés le long de l'axe de rotation (X-X) du mandrin, des moyens de liaison (9, 10) déplaçables entre une première position où ils relient l'un à l'autre, des respectives moyens de jonction (8) fixement reliés à ladite partie pivotante (3) et des moyens de jonction (7) fixement reliés à ladite partie statique (2), ce qui permet à la partie pivotante (3) d'être fixement reliée à la partie statique (2), et une position dans laquelle de tels moyens de liaison (9, 10) sont axialement dégagés desdits moyens de jonction (7, 8), ce qui permet ainsi à la partie pivotante (3) d'être laissé pivoter par rapport à la partie statique (2) moyennant ledit moteur électrique (12), **caractérisé en ce qu'**il comporte une épaulement annulaire (2b) aménagé concentriquement par rapport à la partie pivotante (3) en correspondance des moyens de jonction (8) y étant fixement reliés, ledit épaulement (2b) déterminant un plateau de support pour lesdits moyens de jonction (8) de la partie pivotante (3) dans la direction opposée à celle du verrouillage exercé par les moyens desdits moyens de liaison (9, 10), ainsi qu'un mécanisme de rattrapage de jeu (13, 15), celui-ci n'étant opérationnel que lorsque ladite partie pivotante (3) est libre de pivoter autour de ladite partie statique (2), de façon à garantir le détachement de la partie pivotante (3) dudit épaulement (2b).

2. Mandrin selon la revendication 1, **caractérisé en ce que** ledit mécanisme de rattrapage de jeu comporte une bague (13) aménagée concentriquement par rapport à ladite partie pivotante (3) à l'intérieur d'un premier espace creux annulaire (14) de ladite partie statique (2), ladite bague (13) agissant en tant que support de la coquille extérieure (5a) des paliers (5) appartenant au groupe des paliers axialement écartés desdits moyens de liaison (9, 10) et des moyens de jonction (7, 8) et étant libre de bouger axialement par rapport audit espace creux (14), ainsi qu'un membre élastique (15) aménagé entre ladite bague (13) et ladite partie statique (2) exerçant une poussée sur la bague (13) dans la direction axiale opposée à celle du verrouillage desdits moyens de liaison (9, 10).

3. Mandrin selon les revendication 1 ou 2, **caractérisé en ce que** lesdits moyens de liaison (9, 10) et lesdits moyens de jonction (7) fixement reliés à la partie statique (2) et lesdits moyens de jonction (8) fixement reliés à la partie pivotante (3) sont formés par des membres annulaires munis d'une denture frontale du type Hirth.

4. Mandrin selon la revendication 3, **caractérisé en ce que** lesdits moyens de liaison (9, 10) pour relier l'un à l'autre, respectivement, les moyens de jonction (8) fixement reliés à ladite partie pivotante (3) et les moyens de jonction (7) fixement reliés à ladite partie statique (2), sont entraînés par un cylindre hydraulique annulaire (10) respectif, aménagé concentriquement par rapport à ladite partie pivotante (3).

5. Mandrin selon l'une quelconque des revendications 2, 3 et 4, **caractérisé en ce qu'**il comporte un membre annulaire (18) logé à l'intérieur d'un second espace creux annulaire (19), agissant en tant que piston hydraulique et cylindre afin de positionner l'extrémité (18a) dudit membre (18) à une distance axiale prédéterminée (G) de ladite bague (13), ladite extrémité (18a) formant un aboutement axial de ladite bague (13), qui limite son déplacement dans la direction du mouvement desdits moyens de liaison (9, 10) vers lesdits moyens de jonction (7, 8).
